# EUROPEAN PATENT APPLICATION

(11) **EP 4 729 414 A1**
(43) Date of publication of application: **22.04.2026**
(21) Application number: 24383147.6
(22) Date of filing: 18.10.2024
(51) Int. Cl.: B64D 13/02

(54) **VENTILATION SYSTEM FOR AIRCRAFT AND AIRCRAFT COMPRISING SAID VENTILATION SYSTEM**

(71) Applicant: Airbus Operations, S.L.U., 28906 Getafe, Madrid (ES)
(72) Inventor: RODRIGUEZ HIDALGO, Alvaro Joaquin, 28906 GETAFE (Madrid) (ES); PEREZ ARJONA, Agustin, 28906 GETAFE (Madrid) (ES); RUS PEREZ, Guillermo, 28906 GETAFE (Madrid) (ES)
(74) Representative: Herrero & Asociados, S.L.

(57) **Abstract**

The ventilation system for aircrafts comprises a grid (1) including a plurality of vanes (2), each vane (2) comprising a protrusion (3) at one of its edges, wherein said protrusion (3) is preferably curved, has a height (h) between 1 and 3 mm, and wherein the width (w) of said protrusion (3) is preferably between 5 and 15 mm.

It permits to provide an optimized ventilation system for aircrafts.

## Description

The present invention relates to a ventilation system for aircrafts, in particular, to a ventilation system placed in a belly fairing of an aircraft, and to an aircraft comprising said ventilation system.

### Background of the invention

The operation of an aircraft needs various systems to ensure safe and efficient performance in-flight. Among these systems, effective ventilation is crucial for both pressurized and unpressurized compartments of the aircraft. While pressurized compartments, such as the passenger cabin and cockpit, are designed to maintain a specific atmospheric pressure, unpressurized compartments, such as cargo bays, avionics bays, and certain maintenance areas, do not undergo pressurization during flight and may be exposed to fluctuating external conditions.

Unpressurized compartments are susceptible to environmental variations, such as changes in temperature, humidity, and air pressure as the aircraft ascends and descends. These variations can negatively impact the performance of certain systems and components housed in these compartments, including electronic equipment, wiring, and cargo sensitive to temperature or moisture.

Consequently, it is vital to ensure that air is adequately circulated to prevent overheating, condensation, or the accumulation of harmful gases, such as fuel vapors or carbon dioxide, which may accumulate during long flights.

For obtaining this ventilation, grids are usually installed in the belly fairing of the aircraft as part of the ventilation architecture of these unpressurised compartments.

These grids have to be sized to provide the required ventilation in the critical low speed cases and an adequate level of internal pressures in all the envelope. However, for cruise conditions, they are normally oversized, allowing too much flow exchange and producing undesired drag.

### Description of the invention

Therefore, one objective of the present invention is to provide an optimized ventilation system for aircrafts.

The ventilation system for aircrafts of the invention solves the above-mentioned disadvantages and has other advantages which will be described below.

The ventilation system for aircrafts according to the present invention and an aircraft comprising said ventilation system are described in the respective independent claims, and the dependent claims include additional features that are optional.

In particular, the ventilation system for aircrafts comprises a grid including a plurality of vanes, each vane comprising a protrusion at one of its edges.

Preferably, said protrusion is curved, defining an angle between e.g. 20° and 30°, such as 26°.

According to a preferred embodiment, said protrusion has a height between 1 and 3 mm, such as 2 mm, and the width of said protrusion is between 5 and 15 mm, such as 10 mm.

Preferably, the vanes are distributed in a plurality of rows, such as in two rows.

According to a preferred embodiment, the distance between two adjacent vanes is between 45 and 50 mm, such as 48 mm, and the length of each vane is between 150 and 170 mm, such as 161 mm.

Preferably, the number of vanes is twenty-two distributed in two rows of eleven vanes for each row.

According to a preferred embodiment, the length of the grid is between 800 and 850 mm, such as 820 mm, and the width of the grid is between 400 and 450 mm, such as 435 mm.

According to a second aspect, the present invention refers to an aircraft comprising the ventilation system cited previously, the ventilation system being placed at a belly fairing of the aircraft.

The ventilation system according to the present invention achieves a benefit in drag during cruise while maintaining the required levels of ventilation inside the belly fairing for the critical low speed cases and an adequate internal pressure level for all the envelope.

This is achieved by a detailed geometrical design of the grid vanes. This design is the result of an optimization process in which many different vane geometries have been assessed.

The design of the vanes alters the pressure field in the region of interest in such a way that it diminishes the mass flow in cruise conditions to reduce the drag without any detrimental effect in other critical cases where a certain amount of mass flow is needed for safety reasons.

### Brief description of the drawings

For a better understanding of what has been explained above, some drawings are included in which, schematically and only by way of a non-limiting example, a practical case of embodiment is represented.
Figure 1 is a perspective view of the ventilation system according to the present invention;
Figure 2 is a side view of one of the vanes of the ventilation system according to the present invention;
Figure 3 is a perspective view of the ventilation system according to the present invention installed in an aircraft, in particular at an aft belly fairing of an aircraft; and
Figure 4 is a graph showing a comparison between a conventional ventilation system and the ventilation system according to the present invention, showing the internal pressure coefficient inside the belly fairing compartment vs. the mass flow rate.

### Description of a preferred embodiment

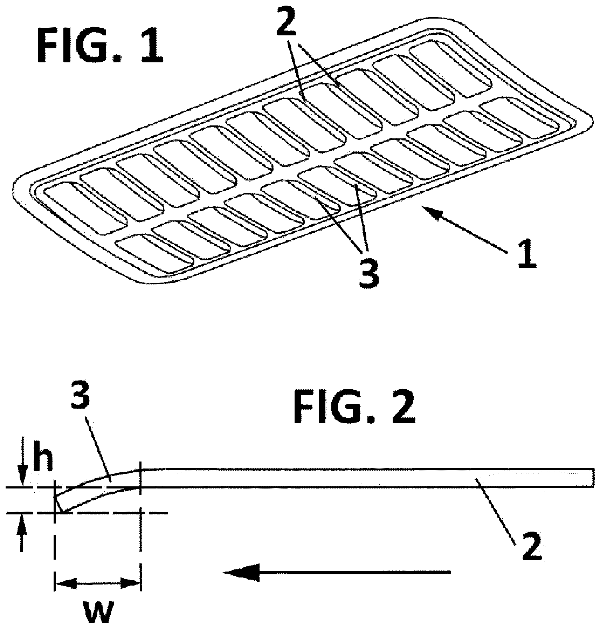

Figure 1 shows a non-limitative embodiment of the ventilation system for aircrafts according to the present invention, that is a grid (1) which features a number of vanes (2) distributed in rows, for example, 22 vanes distributed into two rows.

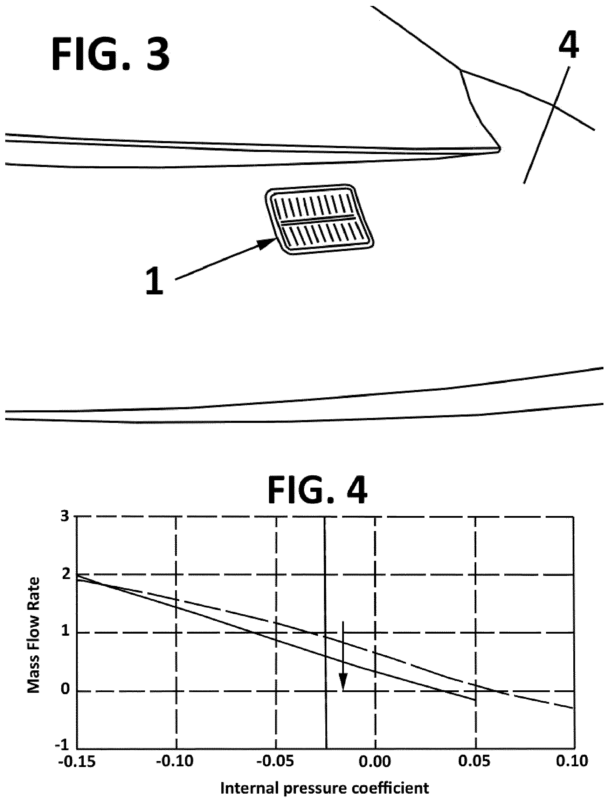

As shown in Figure 3, the position of the grid (1) in the aircraft (4) is preferably at the belly fairing, preferably at the aft belly fairing.

Just as an example, the dimensions of this grid (1) can be the following:
- Number of vanes: 22 (11 vanes/row, 2 rows)
- Vane protrusion height (h): 2 mm
- Vane protrusion width (w): 10 mm
- Distance between adjacent vanes: 48 mm
- Vane length: 161 mm
- Total length: 820 mm
- Total width: 435 mm

The modification of the local pressure field in the grid region is achieved through the protrusion (3) placed at one of the edges of each vane (2), e.g. with a height of 2 mm. This protrusion (3), which is preferably curved defining an angle of 26°, produces a lower pressure in the external part of the grid (1), i.e. the wetted area, which decreases the pressure difference between the internal compartment of the belly fairing, which is a low-pressure zone, and the external part, which yields to diminish the mass flow at cruise conditions.

Decreasing the mass flow at the cruise conditions provides a benefit of 0.15 drag counts. On the other hand, the area of the grid (1) has been increased in comparison with the conventional grids to maintain the required mass flow for the most critical cases when the internal pressure coefficient becomes too low.

Figure 4 is a graph showing a comparison between a conventional ventilation system and the ventilation system according to the present invention, showing the internal pressure coefficient inside the belly fairing compartment vs. the mass flow rate.

Looking at this graph being the discontinuous curve a conventional grid and the continuous curve the grid according to the present invention, it can be seen that the objective is to move the equilibrium point (Mass Flow Rate = 0) to the left to decrease the mass flow at the operating point, which is marked with a vertical line, and to increase the slope of the curve to provide and recover the mass flow levels at the conditions of extreme low internal pressure coefficient so that the internal pressure levels do not exceed the limits.

As shown in this graph, with the ventilation system according to the present invention, the objectives cited previously are obtained, in comparison with a conventional ventilation system.

## Claims

1. Ventilation system for aircrafts, comprising a grid (1) including a plurality of vanes (2), **characterized in that** each vane (2) comprises a protrusion (3) at one of its edges.

2. Ventilation system for aircrafts according to claim 1, wherein said protrusion (3) is curved.

3. Ventilation system for aircrafts according to claim 1 or 2, wherein said protrusion (3) has a height (h) between 1 and 3 mm.

4. Ventilation system for aircrafts according to any one of the previous claims, wherein the width (w) of said protrusion (3) is between 5 and 15 mm.

5. Ventilation system for aircrafts according to claim 2, wherein the curved protrusion (3) defines an angle between 20° and 30°.

6. Ventilation system for aircrafts according to any one of the previous claims, wherein the vanes (2) are distributed in a plurality of rows.

7. Ventilation system for aircrafts according to claim 6, wherein the number of rows is two.

8. Ventilation system for aircrafts according to any one of the previous claims, wherein the distance between two adjacent vanes (2) is between 45 and 50 mm.

9. Ventilation system for aircrafts according to any one of the previous claims, wherein the length of each vane (2) is between 150 and 170 mm.

10. Ventilation system for aircrafts according to any one of the previous claims, wherein the number of vanes (2) is twenty-two distributed in two rows of eleven vanes (2) for each row.

11. Ventilation system for aircrafts according to any one of the previous claims, wherein the length of the grid (1) is between 800 and 850 mm.

12. Ventilation system for aircrafts according to any one of the previous claims, wherein the width of the grid (1) is between 400 and 450 mm.

13. Aircraft comprising the ventilation system according to any one of the previous claims, the ventilation system being placed at a belly fairing of the aircraft (4).
